(19) Europäisches Patentamt

European Patent Office

Office européen des brevets

(11) Veröffentlichungsnummer: **0 315 796 B1**

(12) **EUROPÄISCHE PATENTSCHRIFT**

(45) Veröffentlichungstag der Patentschrift:
29.05.91 Patentblatt 91/22

(51) Int. Cl.$^5$: **F17D 5/02**

(21) Anmeldenummer: **88117244.9**

(22) Anmeldetag: **17.10.88**

(54) Doppelwandiges Rohrleitungssystem.

(30) Priorität: **11.11.87 CH 4399/87**

(43) Veröffentlichungstag der Anmeldung:
**17.05.89 Patentblatt 89/20**

(45) Bekanntmachung des Hinweises auf die
Patenterteilung:
**29.05.91 Patentblatt 91/22**

(84) Benannte Vertragsstaaten:
**AT BE CH DE ES FR GB GR IT LI LU NL SE**

(56) Entgegenhaltungen:
**DE-A- 1 475 842
DE-A- 3 610 435
FR-A- 2 357 812
US-A- 2 255 921
US-A- 4 667 505**

(73) Patentinhaber: **GEORG FISCHER
AKTIENGESELLSCHAFT
Mühlentalstrasse 105
CH-8201 Schaffhausen (CH)**

(72) Erfinder: **Kunz, Peter
Breitenaustrasse 156
CH-8200 Schaffhausen (CH)**
Erfinder: **Hunger, Heinz
Stettemerstrasse 46
CH-8207 Schaffhausen (CH)**
Erfinder: **Wermelinger, Jörg
Lärchenstrasse 14
CH-8200 Schaffhausen (CH)**

## Beschreibung

Die Erfindung betrifft ein doppelwandiges Rohrleitungssystem, wie es im Oberbegriff von Anspruch 1 gekennzeichnet ist.

Für die Weiterleitung gefährlicher bzw. brennbarer Medien in der chemischen, pharmazeutischen oder einer verwandten Industrie werden oft Sicherheits-Rohrleitungssysteme verlangt, welche einen inneren, das Medium weiterleitenden Rohrleitungsstrang und einen äusseren Rohrleitungsstrang aufweisen, wodurch bei Brüchen oder Leckagen des inneren Rohrleitungsstranges das Medium im äusseren Rohrleitungsstrang zur Vermeidung von Unfällen oder Brüchen aufgefangen werden kann.

Durch die DE-A1-19 54 371 ist eine Rohranordnung mit einem inneren und einem äusseren Rohr bekanntgeworden, welche durch als Klemmringverbindungen ausgebildete gemeinsame Endverbindungsmittel mit Armaturen oder anderen Maschinenteilen verbunden werden. Die Endverbindungsmittel sind mit einem mit dem äusseren Rohr verbundenen Auslass versehen, welcher jeweils z.B. mit einem Sammelbehälter für Leckagen verbunden ist. Nachteilig hierbei ist, dass keine durchgehende Verbindung des äusseren Rohrleitungsstranges gegeben ist, und dass bei einem umfangreichen Rohrleitungssystem mit vielen Anschlüssen bei Fittings und Armaturen eine grosse Anzahl von Leckleitungen erforderlich ist. Die US-A-4667 505 zeigt ein Doppelrohrsystem, bei dem die Fittings des äusseren Rohrsystems aus zwei Halbschalen bestehen, welche mit Spannbändern bzw. Briden zusammengehalten werden. Zur Abdichtung werden aufwendig gestaltete Dichtungsprofile dazwischengelegt. An den Verbindungsstellen zu den äusseren Rohren ist eine einwandfreie Abdichtung jedoch nicht möglich.

Die meisten Verwender für Doppelrohrsysteme verlangen, dass dieser äussere Rohrstrang gegenüber dem gleichen Mediumsdruck dicht sein muss wie der innere Rohrleitungsstrang. Dies ist bei dem in dieser Schrift gezeigten Rohrleitungssystem nicht möglich.

Ausgehend von dem durch die US-A-4667505 bekannten nächstliegenden Stand der Technik ist es Aufgabe der vorliegenden Erfindung bei einem doppelwandigen Rohrleitungssystem die Rohrverbindungen im äusseren Rohrstrang zu verbessern und auf den Nenndruck des inneren Rohrstranges auszulegen wobei auch die Rohrverbindungen am inneren Rohrstrang trotz aufgeschobener äusserer Rohre problemlos herstellbar sein sollen.

Erfindungsgemäss wird dies durch die kennzeichnenden Merkmale des Anspruches 1 gelöst.

Weitere vorteilhafte Ausgestaltungen der Erfindung sind in den davon abhängigen Ansprüchen gekennzeichnet.

Durch die kennzeichnenden Merkmale von Anspruch 1 ist eine einwandfreie Erstellung einer Schweiss- bzw. Klebeverbindung der inneren Rohre mit den Fittings bzw. Armaturen gewährleistet, auch wenn bereits die äusseren Rohre über die inneren Rohre geschoben sind. Gleichzeitig ist gewährleistet, dass die Verbindungen am äusseren Rohrstrang auch bei dem Nenndruck dicht sind, für welchen der innere Rohrleitungsstrang ausgelegt ist, so dass die Anforderungen der Verwender erfüllt sind.

Die Erfindung ist in den beiliegenden Zeichnungen beispielsweise dargestellt und nachfolgend beschrieben. Es zeigen :

Fig. 1 einen Teilausschnitt eines doppelwandigen Rohrleitungssystems mit einem T-Fitting teils im Schnitt

Fig. 2 zwei Hälften des äusseren T-Fittings von Fig. 1 in perspektivischer Darstellung

Fig. 3 zwei Hälften eines als Winkel ausgebildeten äusseren Fitting in perspektivischer Darstellung

Fig. 4 einen Teillängsschnitt des doppelwandigen Rohrleitungssystems mit einer als Kugelhahn ausgebildeten Armatur

Fig. 5 einen Schnitt entlang der Linie V-V von Fig. 4 und

Fig. 6 eine perspektivische Ansicht eines in Fig. 1 bzw.

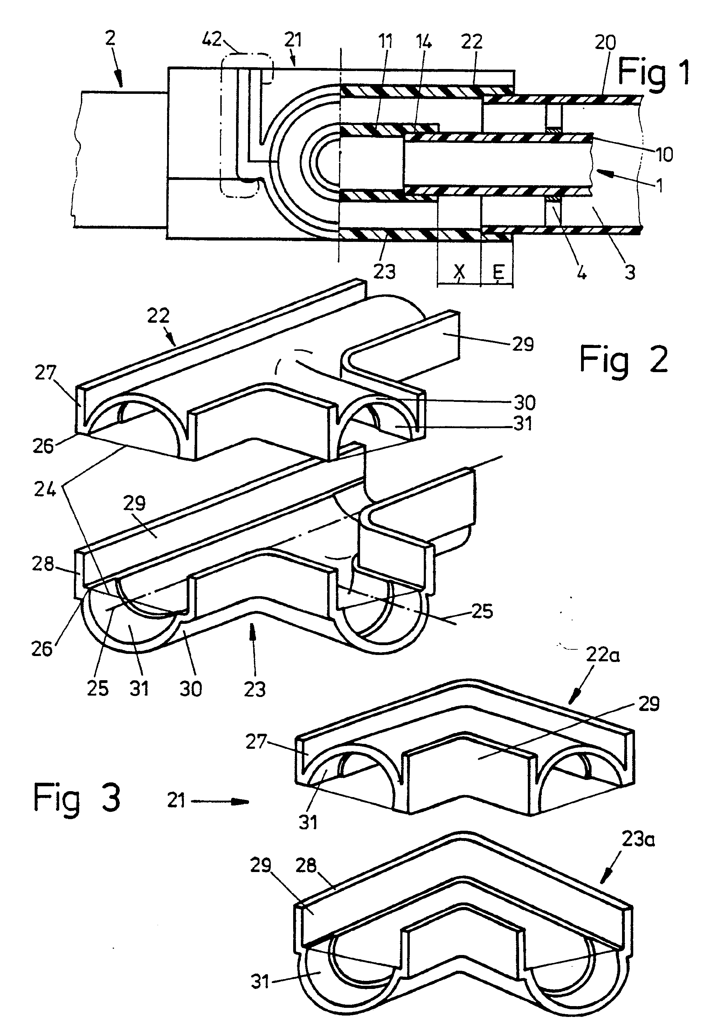

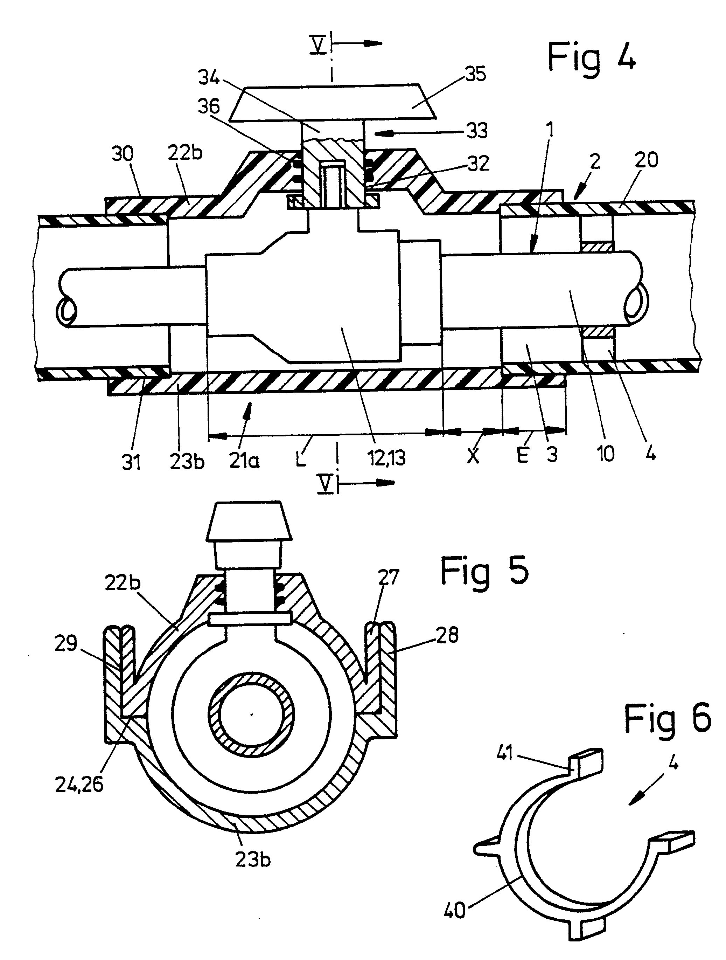

Fig. 4 gezeigten Distanzhalters. Der in Figur 1 gezeigte Ausschnitt eines doppelwandigen Rohrleitungssystems weist einen inneren Rohrleitungsstrang 1 und einen äusseren Rohrleitungsstrang 2 auf.

Der innere Rohrleitungsstrang weist Kunststoff-Rohre 10, Fittings 11 wie z.B. ein in Figur 1 gezeigtes T-Stück und Armaturen 12, wie z.B. einen in Figur 4 gezeigten Kugelhahn 13 auf und entsprechen den in den üblichen einfachen Rohrleitungssystemen verwendeten Rohren, Fitings und Armaturen.

Die Verbindungen zwischen den Rohren 10 und den Fittings 11 bzw. Armaturen 12 sind nichtlösbare Schweiss- oder Klebeverbindungen 14.

Der äussere Rohrstrang 2 weist zentrisch zu den Rohren 10 angeordnete Kunststoff-Rohre 20 auf, wobei zwischen den Rohren 10 und 20 für die zentrische Lage Distanzhalter 4 angeordnet sind. Der äussere Rohrleitungsstrang 2 weist ebenfalls Fittings 21 auf, welche aus zwei Halbschalen 22 und 23 bestehen.

Figur 2 zeigt die beiden als T-Stücke ausgebildeten Halbschalen 22, 23 vor der Montage im Rohrleitungssystem.

Die Trennebene 24 der Halbschalen verläuft durch die Achsen 25 der anzuschliessenden Rohre 20, wobei jede Halbschale 22, 23 eine in der Trennebene verlaufende Auflagefläche 26 aufweist. Am äusseren Rand der Auflagefläche 26 sind vertikal oder nahezu vertikal zur Trennebene verlaufende Stege 27, 28 angeordnet. Beim Zusammenstecken der beiden Halbschalen kommt der Steg 27 der oberen Halbschale 22 innerhalb des Steges 28 der unteren Halbschale 23 zu liegen, so dass die Aussenfläche des Steges 27 und die Innenfläche des Steges 28 die Verbindungsflächen 29 bilden. Zum Verbinden der Rohre 20 mit den Halbschalen 22, 23 weisen diese an Muffenpartien 30 halbzylinderförmige Verbindungsflächen 31 auf.

Vorzugsweise werden die Halbschalen 22, 23 miteinander und mit den eingesteckten Rohren 20 durch eine Klebung verbunden wobei durch die entsprechend grossen Verbindungsflächen 29, 31 eine ausreichende Festigkeit der mittels eines Kunststoff-Klebers hergestellten Verbindung gegeben ist. Die Verbindung zwischen Halbschalen und den Rohren kann auch als Schweissverbindung ausgebildet sein. Für eine Zusammenspannung der beiden Halbschalen 22, 23 kann während dem Kleben eine Klammer 42 wie in Fig. 1 strichpunktiert dargestellt, die Stege 27, 28 umfassend angeordnet werden.

Der Radius der halbzylinderförmigen Verbindungsfläche und die Einstecklänge E für das äussere Rohr 20 weisen derartige Abmessungen auf, dass eine optimale Schweiss- oder Klebeverbindung mit dem Rohr 20 gewährleistet ist, wobei deren Festigkeit für den gleichen Nenndruck augelegt ist wie für das verwendete, vorzugsweise als Standardrohr ausgebildete Rohr 20. Auch die Wandstärken der Muffenpartien 30 und im Bereich zwischen den Muffenpartien 30 werden entsprechend dem Nenndruck der Rohre 20 ausgelegt.

Die Figur 3 zeigt einen zweiteiligen Fitting 21, welcher als Winkel L-förmig ausgebildet ist und ebenfalls aus zwei Halbschalen 22a und 23a besteht, wobei die Ausbildung der Verbindungsflächen 29, 31 und Stege 27, 28 gleich ist wie bei dem in Figur 2 dargestellten T-förmigen Fitting.

Die Figur 4 und 5 zeigen einen Ausschnitt des doppelwandigen Rohrleitungssystems mit einer im inneren Rohrleitungsstrang 1 angeordneten Armatur 12, welche im dargestellten Beispiel als handbetätigter handelsüblicher Kugelhahn 13 ausgebildet ist. Der äussere Rohrleitungsstrang 2 weist zwischen den beiden Rohren 20 eine zweiteilige Armaturen-Ummantelung 21a auf, welche aus zwei Halbschalen 22b und 23b besteht. Trennebene 24, Auflageflächen 26, Stege 27 und 28, Muffenpartien 30 und die Verbindungsflächen 29 und 31 sind entsprechend dem zu Figur 2 beschriebenen Fitting 21 ausgebildet. Eine der beiden Halbschalen 22b weist eine Durchtrittsöffnung 32 für eine Betätigungseinrichtung 33 des Kugelhahnes 13 auf.

Zur Verwendung eines gebräuchlichen Kugelhahnes 13 weist die Betätigungseinrichtung 33 ein zusätzliches Kupplungsstück 34 auf, an welchem der Handhebel 35 angeordnet ist. Zur Abdichtung nach aussen sind in der Durchtrittsöffnung 32 Dichtungen 36 angeordnet.

Durch die als Halbschalen ausgebildeten Fittings und Ummantelungen für die Armaturen wird im gesamten Rohrleitungssystem ein durchgehend verbundener äusserer ringförmiger Raum 3 gebildet, so dass bei Leckagen bzw. Brüchen an Fittings, Armaturen oder Rohren des inneren Rohrleitungsstranges 1 das in den Raum 3 ausgetretene Medium durch das gesamte System fliessen kann und eventuell nur an einer Stelle abgeleitet werden muss.

Es können auch Sonden zur Meldung von Leckagen in dem Raum 3 angeordnet werden, welche mit einem Warnsystem wirkverbunden sind.

Es besteht auch die Möglichkeit, dass die Rohre 20 des äusseren Rohrstranges 2 aus einem durchsichtigen Material wie z.B. Plexyglas oder glasklares PVC hergestellt sind, um sofort Leckagen zu erkennen.

Wie aus Figur 1 und Figur 4 ersichtlich, ist die Erstrekkung der Halbschalen 22, 23 längs der Rohrleitungsachse 25 an jeder Seite eines Rohranschlusses um die Einstecklänge E des äusseren Rohres 20 plus einem Betrag x grösser als die entsprechende Abmessung bzw. Länge L des Fittings 11 bzw. Armatur 12 des inneren Rohrstranges 1.

Dies ermöglicht eine einwandfreie Erstellung der Schweiss-bzw. Klebeverbindungen der Rohre 10 mit den Fittings 11 und Armaturen 12 trotzdem dass vor dieser Montage das äussere Rohr 20 bereits über das Rohr 10 geschoben angeordnet ist.

Nach Fertigstellung des inneren Rohrstranges 1 können dann die vormontierten äusseren Rohre 20 durch das Aufsetzen der Halbschalen 22, 23 in den Bereichen der Fittings 11 und Armaturen 12 zum äusseren durchgehenden Rohrstrang 2 verbunden werden, wobei die Halbschalen für einwandfreie Klebe- oder Schweissverbindungen ausgebildet sind.

Figur 6 zeigt einen Distanzhalter 4, welcher auf die Rohre 10 des inneren Stranges 1 aufklemmbar ist und die koaxiale Lage des Rohres 20 gewährleistet. Der Distanzhalter 4 weist einen federnd aufweitbaren Klemmring 40 auf, welcher mindestens 2/3 – vorzugsweise 3/4 des Rohrumfanges umschliesst. An dem Klemmring 40 sind mindestens drei, vorzugsweise vier radial nach aussen gerichtete Stege 41 angeordnet, welche am Umfang gleichmässig verteilt das äussere Rohr 20 mit etwas Spiel halten.

Das erfindungsgemässe doppelwandige Rohrleitungssystem bietet folgende Vorteile :

– Wärmeausdehnung des inneren Rohrstranges ist unabhängig vom äusseren Rohrstrang möglich

– der innere Rohrstrang kann aus bestehenden und bewährten Produkten erstellt werden,

– für den äusseren Rohrleitungsstrang können Standard-Rohre verwendet werden

– optimale Verbindungen am inneren Rohrleitungsstrang

– einfaches und nachträgliches Anbringen der als Halbschalen ausgebildeten äusseren Fittings und Armaturen-Abdeckungen
– nur für die Halbschalen sind neue Formen erforderlich, so dass niedrige Investitionen für Formen erforderlich sind,
– der innere Rohrstrang und der äussere Rohrstrang können unabhängig voneinander aus dem jeweils vorteilhaftesten Kunststoff-Material hergestellt werden.

## Ansprüche

1. Doppelwandiges Rohrleitungssystem für Durchflussmedien mit einem, Fittings wie z.B. T-Stücke, Winkel oder Bögen (11) und Armaturen (12), wie z.B. Ventile, Absperrhähne usw. aufweisenden, inneren Rohrleitungsstrang (1) und einem konzentrisch dazu angeordneten, äusseren Rohrleitungsstrang (2) wodurch im Rohrleitungssystem ein durchgehend verbundener, äusserer, ringförmiger Raum (3) gebildet ist, wobei der äussere Rohrleitungsstrang (2) aus zwei Halbschalen (22, 23) bestehende, zweiteilige Fittings (21) und Armaturen-Ummantelungen (21a) aufweint, welche mittels einer Stoffschlussverbindung dicht miteinander verbunden sind, dadurch gekennzeichnet, dass die Halbschalen (22, 23) mit den äusseren Rohren (20) mittels einer Klebe- oder Schweissverbindung verbunden sind, dass jede Halbschale (22, 23) eine Muffenpartie (30) mit einer halbzylinderförmigen Verbindungsfläche (31) aufweist, deren Radius und die Einstecklänge (E) für eine optimale Schweiss- oder Klebeverbindung mit dem äusseren Rohr (20) ausgebildet ist, deren Festigkeit für den gleichen Nenndruck ausgelegt ist wie die des verwendeten Rohres (20) und dass die Erstreckung der Halbschalen (22, 23) längs jeder Rohrleitungsachse (25) an jeder Seite eines Rohranschlusses mindestens um die Einstecklänge (E) des äusseren Rohres (20)in die Halbschalen (22, 23) grösser ist als die entsprechende Abmessung des bzw. der innerhalb der Halbschalen (22, 23) angeordneten Fittings (11) bzw. Armatur (12).

2. Rohrleitungssystem nach Anspruch 1, dadurch gekennzeichnet, dass jede Halbschale (22, 23) Verbindungsflächen (29) aufweist, welche an vertikal oder nahezu vertikal zur Trennebene (24) der beiden Halbschalen (22, 23) verlaufenden Stegen (27, 28) angeordnet sind.

3. Rohrleitungssystem nach einem der Ansprüche 1 oder 2, dadurch gekennzeichnet, dass jede Halbschale (22, 23) eine in der Trennebene (24) verlaufende Auflagefläche (26) aufweist.

4. Rohrleitungssystem nach einem der Ansprüche 1 bis 3, dadurch gekennzeichnet, dass mindestens eine der beiden für die Ummantelung (21a) einer Armatur (12) ausgebildeten Halbschalen (22b, 23b) mit einer Durchtrittsöffnung (32) für eine Betätigungseinrichtung (33) der Armatur (12) versehen ist.

5. Rohrleitungssystem nach einem der Ansprüche 1 bis 4 dadurch gekennzeichnet, dass der innere Rohrstrang (1) mit auf dessen Rohre (10) aufsteckbaren Distanzhaltern (4) versehen ist.

6. Rohrleitungssystem nach Anspruch 5, dadurch gekennzeichnet, dass der Distanzhalter (4) einen 2/3 bis 3/4 des Rohrumfanges umschliessenden, federnd aufweitbaren Klemmring (40) aufweist, an welchem mindestens drei, vorzugsweise vier radial nach aussen gerichtete, das äussere Rohr (20) haltende Stege (41) angeordnet sind.

7. Rohrleitungssystem nach einem der Ansprüche 1 bis 6, dadurch gekennzeichnet, dass die Fittings (11) des inneren Rohrleitungsstranges (1) durch Schweissen oder Kleben mit den Rohren (10) verbunden sind.

8. Rohrleitungssystem nach einem der Ansprüche 1 bis 7, dadurch gekennzeichnet, dass im Raum (3) zwischen dem inneren und äusseren Rohrleitungsstrang (1, 2) Sonden zur Feststellung von Leckagen des Durchfluss-Mediums angeordnet sind, welche mit einer Warneinrichtung wirkverbunden sind.

## Revendications

1. Système de tuyauterie à double paroi pour la circulation de fluides comprenant une ligne de tuyauterie intérieure (1) présentant des raccords tels que des pièces en T, des équerres ou des coudes (11) et des robinetteries, telles que des valves, des robinets d'arrêt et autres, et une ligne de tuyauterie extérieure (2), disposée concentriquement à celle-ci, grâce à quoi est réalisé un intervalle annulaire extérieur (3), relié de manière continue, tandis que la ligne de tuyauterie extérieure (2) présente des raccords en deux parties (21) constitués par deux demi-coquilles (22, 23) et des revêtements de robinetterie (21a) qui sont reliés ensemble de façon étanche au moyen d'une jonction par interpénétration de matière, caractérisé en ce que les demi-coquilles (22, 23) sont reliées aux tuyaux extérieurs (20) au moyen d'une jonction par collage et soudage, en ce que chaque demi-coquille (22, 23) présente une partie de manchon (30) avec une surface de liaison (31) de forme hémicylindrique, dont le rayon et la longueur d'enfichage (E) sont déterminées en vue d'une jonction optimale par soudage ou par collage avec le tuyau (20) extérieur, dont la résistance est conçue pour une même pression nominale que celle du tuyau utilisé (20) et en ce que l'extension des demi-coquilles (22, 23) le long de chaque axe de tuyauterie (25) de chaque côté d'un raccord de tuyau est supérieure d'au moins la longueur d'enfichage (E) du tuyau extérieur (20) dans les demi-coquilles (22, 23) à la dimension correspondante du ou des raccord(s) (11), disposés à l'intérieur des demi-coquilles (22, 23) ou de la robinetterie (12).

2. Système de tuyauterie selon la revendication 1, caractérisé en ce que chaque demi-coquille (22, 23) présente des surfaces de liaison (29) qui sont disposées sur les traverses (27, 28) s'étendant perpendiculairement ou presque perpendiculairement au plan de séparation (24) des demi-coquilles (22, 23).

3. Système de tuyauterie selon l'une des revendications 1 ou 2, caractérisé en ce que chaque demi-coquille (22, 23) présente une surface d'appui (26) s'étendant dans le plan de séparation (24).

4. Système de tuyauterie selon l'une des revendications 1 à 3, caractérisé en ce qu'au moins une des deux demi-coquilles (22b, 23b) constituée pour l'enveloppement (21a) d'une robinetterie (12) est pourvue d'une ouverture de passage (32) pour un organe d'actionnement (33) de la robinetterie (12).

5. Système de tuyauterie selon l'une des revendications 1 à 4, caractérisé en ce que la ligne de tuyauterie intérieure (1) est pourvue d'écarteurs (4) qui peuvent être engagés sur les tuyaux de cette ligne.

6. Système de tuyauterie selon la revendication 5, caractérisé en ce que l'écarteur (4) présente une bague de serrage (40) élastique et susceptible d'être élargie, qui entoure 2/3 à 3/4 du pourtour du tuyau, sur lequel sont disposées au moins trois, de préférence quatre barrettes (41), dirigées radialement vers l'extérieur et qui maintiennent le tuyau extérieur (20).

7. Système de tuyauterie selon l'une des revendications 1 à 6, caractérisé en ce que les raccords (11) de la ligne de tuyauterie intérieure (1) sont reliés aux tuyaux (10) par soudage ou par collage.

8. Système de tuyauterie selon l'une des revendications 1 à 7, caractérisé en ce qu'il est disposé, dans l'espace (3) entre les lignes de tuyauterie (1, 2) intérieure et extérieure, des sondes destinées à constater les fuites du fluide transporté et qui sont en liaison active avec un dispositif d'avertissement.

## Claims

1. Double-walled pipe line system for through-flowing media, having an inner pipe line train (1) which has fittings such as, for example, T-pieces, angles or curves (11) and fixtures (12), such as, for example, valves, stop valves etc., and an outer pipe line train (2) which is arranged concentrically thereto, whereby there is formed in the pipe line system a continuously connected, outer, annular space (3), the outer pipe line train (2) having two-part fittings (21) and fixture coverings (21a) which consist of two half- shells (22, 23) and which are connected with each other in sealing fashion by means of a material-closing connection, characterised in that the half-shells (22, 23) are connected to the outer pipes (20) by means of an adhered or welded connection, in that each half-shell (22, 23) has a sleeve section (30) with a semi-cylindrical connecting surface (31), the radius and the length of insertion (E) of which is formed for an optimum welded or adhered connection with the outer pipe (20), the firmness of which connection is designed for the same nominal pressure as that of the pipe (20) used, and in that the extension of the half-shells (22, 23) along each pipe line axis (25) on each side of a pipe connection is greater by at least the length of insertion (E) of the outer pipe (20) into the half-shells (22, 23) than the corresponding dimension of the fitting (11) or fixture (12) arranged within the half-shells (22, 23).

2. Pipe line system according to claim 1, characterised in that each half-shell (22, 23) has connecting surfaces (29) which are arranged on flanges (27, 28) running perpendicularly or almost perpendicularly to the parting plane (24) of the two half-shells (22, 23).

3. Pipe line system according to one of claims 1 or 2, characterised in that each half-shell (22, 23) has a resting surface (26) which runs in the parting plane (24).

4. Pipe line system according to one of claims 1 to 3, characterised in that at least one of the two half-shells (22b, 23b) formed for the covering (21a) of a fixture (12) is provided with a through-opening (32) for an actuating device (33) of the fixture (12).

5. Pipe line system according to one of claims 1 to 4, characterised in that the inner pipe train (1) is provided with spacers (4) which can be placed onto the pipes (10) of the inner pipe train.

6. Pipe line system according to claim 5, characterised in that the spacer (4) has a clamping ring (40) which encompasses 2/3 to 3/4 of the pipe periphery, can be expanded in a resilient manner and on which there are arranged at least three, preferably four flanges (41) which are directed radially outwards and hold the outer pipe (20).

7. Pipe line system according to one of claims 1 to 6, characterised in that the fittings (11) of the inner pipe line train (1) are connected to the pipes (10) by welding or adhesion.

8. Pipe line system according to one of claims 1 to 7, characterised in that there are arranged in the space (3) between the inner and outer pipe line train (1, 2) probes for determining leakages of the through-flowing medium, which probes are operatively connected with a warning device.

Fig 1

Fig 2

Fig 3

Fig 4

Fig 5

Fig 6